# EUROPEAN PATENT APPLICATION

(11) **EP 1 834 521 A1**
(43) Date of publication of application: **19.09.2007**
(21) Application number: 07102619.9
(22) Date of filing: 19.02.2007
(51) Int. Cl.: A01G 23/04, B62D 55/00, B62D 55/06, E02F 5/02

(54) **Multifunctional machine for nursery gardening**

(30) Priority: 24.02.2006 IT PD20060033 U
(71) Applicant: Holmac S.A.S. di Gastaldi Christian E.C., 35127 Padova (IT)
(72) Inventor: Gastaldi, Christian, 35131, Padova (IT)
(74) Representative: Modiano, Micaela Nadia

(57) **Abstract**

A multifunctional machine for nursery gardening comprising:
- a chassis (11) provided with motorized tracks (12),
- a driver's seat (13), which comprises a dashboard (14) and a seat (15) and can rotate through at least 180°,
- first means (16) for supporting tools and for coupling and power transmission, fitted with a first root balling tool (17),
- second means (18) for supporting tools and for coupling and power transmission, which are fitted with a second tool selected among a drill, a stick driver, a pole driver, a plant binder (26), or another tool adapted for nursery gardening.

## Description

The present invention relates to a multifunctional machine for nursery gardening.

In order to perform work in plant nurseries rapidly and with high productivity while fully respecting the natural environment in which this work is performed, the need is well-known for machines which are conceived and provided specifically for the many tasks performed in a nursery.

Self-propelled vehicles are widespread in the nursery gardening sector which are constituted by a chassis on wheels or tracks, which is provided with a driver's seat and supports a tool selected among a root balling tool, a plant binder, a drill, a stick driver, a pole driver or another equivalent or similar tool.

These self-propelled vehicles generally rest on the ground by means of at least one pair of stabilizer arms, which can be extended and are adapted to increase the contact base determined by the wheels or tracks with which said vehicles are provided.

Although said vehicles are widely appreciated commercially, they are not entirely free from aspects which can be improved.

The main drawback is the lack of flexibility in use.

In each instance, depending on requirements, it is in fact necessary to remove a tool from the machine in order to fit a different one.

These operations for removing and fitting a tool force the operator to return the machine to the place where the tools are stored, perform the replacement, and then return to the place where work is to be done with the tool that has just been fitted to the machine.

These displacements are an unavoidable source of wasted time, and so are the operations for replacing the tools.

The aim of the present invention is to provide a multifunctional machine for nursery gardening and other similar sectors which is flexible and capable of performing several preset functions.

Within this aim, an object of the present invention is to provide a multifunctional machine which is easy to drive and manage in its functionalities even for an operator who does not have particular prior teachings and has the notions required to drive known types of vehicle.

Another object of the present invention is to provide a multifunctional machine which is stable, can be stabilized easily and quickly if required, and can move rapidly and easily on any type of terrain, from packed soil to muddy/swampy terrain.

Another object is to provide a multifunctional machine which is capable of adapting its wheel gage to the space available between two consecutive rows of a nursery.

Another object of the invention is to provide a multifunctional machine which is capable of reversing its direction of travel quickly and in a small space.

Another object of the present invention is to provide a multifunctional machine for nursery gardening which can be manufactured with known systems and technologies.

This aim and these and other objects, which will become better apparent hereinafter, are achieved by a multifunctional machine for nursery gardening, characterized in that it comprises:
- a chassis provided with motorized tracks,
- a driver's seat which comprises a dashboard and a seat and can rotate through at least 180°,
- first means for supporting tools and for coupling and power transmission, fitted with a first root balling tool,
- second means for supporting tools and for coupling and power transmission, which are fitted with a second tool selected among a drill, a stick driver, a pole driver, a plant binder, or another tool adapted for nursery gardening.

Further characteristics and advantages of the invention will become better apparent from the following detailed description of five preferred but not exclusive embodiments thereof, illustrated by way of non-limiting example in the accompanying drawings, wherein:
Figure 1 is a perspective view of a multifunctional machine according to the invention;

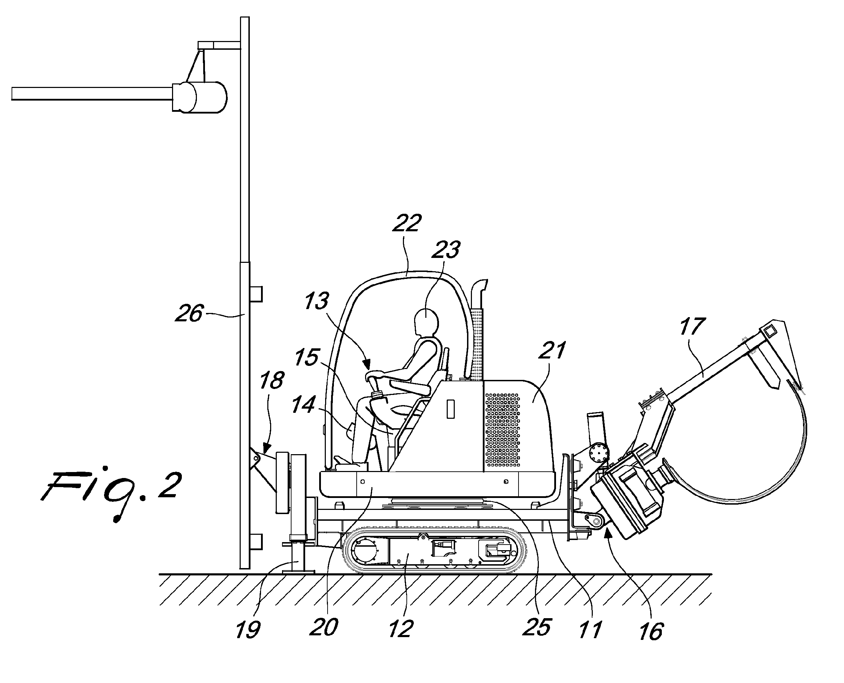

Figure 2 is a first side view of a multifunctional machine according to the invention;

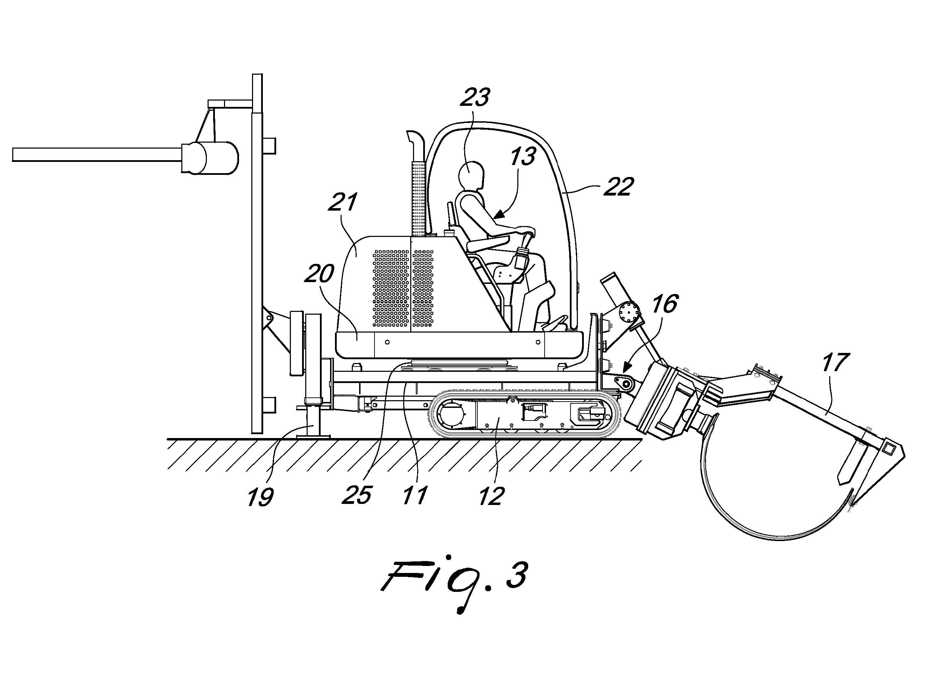

Figure 3 is a second side view of a multifunctional machine according to the invention.

With reference to the figures, a multifunctional machine for nursery gardening according to the invention is generally designated by the reference numeral 10.

The multifunctional machine 10 for nursery gardening comprises:
- a chassis 11 provided with motorized tracks 12,
- a driver's seat 13, which comprises a dashboard 14 and a seat 15 and can rotate through at least 180°,
- first supporting means 16 for supporting tools and for coupling and power transmission, fitted with a first root balling tool 17,
- second supporting means 18 for supporting tools and for coupling and power transmission, which are fitted with a second tool selected among a drill, a stick driver, a pole driver, a plant binder, or another similar or equivalent tool.

The machine 10 according to the invention is therefore provided with two tools, one of which is the root balling tool 17; the machine 10 allows to save the time required to remove a tool from the machine to fit another different one, and as mentioned these operations for removing and fitting a tool force the operator to return the machine to the place where the tools are stored, perform the replacement, then return to the site where work is to be performed with the tool that has just been fitted to the machine.

Avoiding these movements and operations allows to save time, fuel and precious physical energy.

Further, the machine 10 comprises two lateral stabilizer arms 19 of the telescopic type.

In another embodiment of the machine 10 according to the invention, the tracks 12 have a variable configuration.

The driver's seat 13 is formed by a platform 20 on which the internal combustion engine is mounted inside its own hood 21, together with the seat 15 and the dashboard 14.

The dashboard 14 and the seat 15 are inside a volume or space formed by a protective structure 22 for an operator 23.

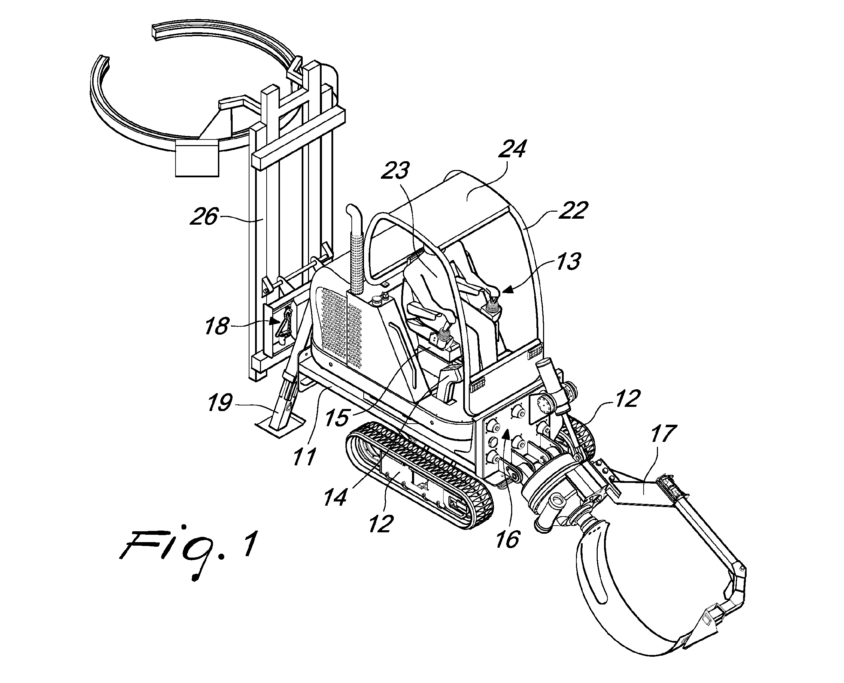

The protective structure 22 can be constituted by a simple metal frame with a roof 24, as in Figure 1, or a cabin in an embodiment of the invention which is not shown for the sake of simplicity.

The platform 20 is rigidly coupled to the chassis 11 by interposing a center bearing 25, which allows its rotation with respect to the chassis 11.

Rotation of the platform 20 with the associated driver's seat 13 allows to maneuver in the best possible conditions the tools with which the machine 10 is provided.

The driver's seat 13 can be turned easily by hand simply by freeing the rotation prevented by an appropriate known type of locking means, but this rotation can also be motorized, by installing a dedicated hydraulic or electric drive which is associated with reduction means interposed between said drive and a portion of the center bearing which is rigidly coupled to the platform 20.

The first tool supporting means comprise a hydraulic power take-off, of a per se known type, for actuating the root balling tool 17.

The second tool supporting means comprise a power take-off and at least two hydraulic power take-offs for the actuation of a plant binding tool 26.

The machine 10 according to the invention, provided with the plant binding tool 26 on one side and with the root balling tool 17 on the other, is capable of performing sequentially the operations for binding a plant to be removed from the ground, by means of the binding tool 26, and the removal operation by means of the root balling tool 17, without having to use, in order to perform the two operations, two separate machines and without requiring a time interval for tool replacement between these two operations.

The time that elapses between the end of a first binding operation and the beginning of the subsequent root balling operation is the time required to turn the driver's seat 13 and reposition the machine 10 with respect to the plants on which one is to work.

The configuration of the tracks 12 is determined by means of appropriately provided devices of a known type, which are not shown and are driven by actuators.

By actuating said actuators, the tracks 12 are pushed outward so as to widen the wheel gage and at the same time are moved forward.

The advancement of the tracks 12 advantageously entails the retraction of the center of gravity of the machine 10 according to the invention.

Likewise, the tracks 12 are retracted so as to reduce the wheel gage if it is necessary for the machine 10 to move between two particularly narrow rows.

In practice it has been found that the invention thus described solves the problems noted in known types of nursery gardening machine.

In particular, the present invention provides a multifunctional machine for nursery gardening which is flexible and capable of supporting the most disparate tools depending on the requirements of a user.

Moreover, the present invention provides a multifunctional machine which is capable of supporting on one side a root balling tool and on the opposite side a tool selected among a plant binder, a drill, a stick driver, a pole driver, or other tools which are similar in terms of structure or function.

Further, the present invention provides a multifunctional machine which, thanks to the variable-configuration tracks, is capable of adapting to the most disparate terrains, allowing permanent stable balance of all the machine and of what it is carrying and/or supporting.

Said variable-configuration tracks in fact allow to travel over the large holes produced by the removal of sods linked to the removal of roots from the soil.

Said tracks also allow the machine according to the invention to adapt the configuration of the wheel gage to the width of the rows in which said machine is to pass.

Moreover, the present invention provides a multifunctional machine which, thanks to the possible mutually opposite rotation of the tracks, can turn about its own axis if a reversal of travel direction in particularly confined spaces is required.

Further, the present invention provides a multifunctional machine which is easy to drive and manage in its functionalities even for an operator who does not have particular prior teachings and has the notions required to drive known types of vehicle.

Moreover, the present invention provides a multifunctional machine for nursery gardening which can be produced with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Utility Model Application No. PD2006U000033 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A multifunctional machine for nursery gardening, **characterized in that** it comprises:
- a chassis (11) provided with motorized tracks (12),
- a driver's seat (13), which comprises a dashboard (14) and a seat (15) and can rotate through at least 180°,
- first means (16) for supporting tools and for coupling and power transmission, fitted with a first root balling tool (17),
- second means (18) for supporting tools and for coupling and power transmission, which are fitted with a second tool selected among a drill, a stick driver, a pole driver, a plant binder (26), or another tool adapted for nursery gardening.

2. The machine according to claim 1, **characterized in that** it comprises at least two lateral stabilizing arms (19).

3. The machine according to one or more of the preceding claims, **characterized in that** said tracks (12) have a variable configuration.

4. The machine according to one or more of the preceding claims, **characterized in that** said driver's seat (13) is formed by a platform (20) on which the internal-combustion engine is installed inside its own hood (21), together with said seat (15) and said platform (14), said seat and platform being arranged within a volume formed by a protective structure (22) for the operator (23), said platform being rigidly coupled to the chassis (11) by interposing a center bearing (25) which allows it to rotate with respect to said chassis (11).

5. The machine according to one or more of the preceding claims, **characterized in that** said protective structure (22) is constituted by a simple metallic frame with a roof (24).

6. The machine according to one or more of the preceding claims, **characterized in that** said first tool supporting means (16) comprise at least one hydraulic power take-off for the actuation of said root balling tool (17).

7. The machine according to one or more of the preceding claims, **characterized in that** said second tool supporting means (18) comprise a power take-off and at least two hydraulic power take-offs for actuating a plant binding tool (26).
